# EUROPÄISCHE PATENTSCHRIFT

(11) **EP 1 433 940 B1**
(45) Veröffentlichungstag und Bekanntmachung des Hinweises auf die Patenterteilung: **10.10.2012**
(21) Anmeldenummer: 03102407.8
(22) Anmeldetag: 01.08.2003
(51) Int. Cl.: F02D 41/14, F01N 11/00, G01N 27/406

(54) **Verfahren zum Betreiben eines Gassensors und Vorrichtung zur Durchführung des Verfahrens**
Method for operating a gas sensor and device for carrying out the method
Procédé pour actionner un détecteur de gaz et dispositif pour la mise en oeuvre du procédé

(30) Priorität: 23.12.2002 DE 10260720
(43) Veröffentlichungstag der Anmeldung: 30.06.2004
(73) Patentinhaber: ROBERT BOSCH GMBH, 70442 Stuttgart (DE)
(72) Erfinder: Schnaibel, Eberhard, 71282, Hemmingen (DE); Winkler, Klaus, 71277, Rutesheim (DE); Tiefenbach, Andy, 71254, Ditzingen (DE)

(56) Entgegenhaltungen:
- WO-A2-01/23730
- DE-A1- 3 102 918
- DE-A1- 4 300 530
- DE-A1- 19 612 387

## Beschreibung

### Stand der Technik

Die Erfindung geht aus von einem Verfahren zum Betreiben eines Gassensors und von einer Vorrichtung zur Durchführung des Verfahrens nach der Gattung der unabhängigen Ansprüche.

In dem Fachbuch "Ottomotor-Management/Bosch", Verlag Vieweg, 1. Auflage 1998, Seiten 20-23 sind Lambdasonden beschrieben, die ein Maß für die Luftzahl Lambda im Abgas von Verbrennungsprozessen bereitstellen. Die Wirkungsweise der beschriebenen Lambdasonden beruht auf dem Prinzip einer galvanischen Sauerstoffkonzentrationszelle mit einem Festkörperelektrolyt. Die Oberflächen sind mit Elektroden aus einer gasdurchlässigen Platinschicht versehen. Durch die katalytische Aktivität des Platins wird das Abgas durch Nachverbrennen mit dem Sauerstoffpartialdruck ins Gleichgewicht gesetzt, so dass sich der Gleichgewichtspartialdruck einstellt. Eine eindeutige Messung des Lambdawertes ist nur möglich, wenn sich an der Platinelektrode ein thermodynamisches Gleichgewicht der reagierenden Gase einstellen kann. Neben der katalytischen Wirksamkeit der dem Abgas ausgesetzten Elektrode muss die Elektrode mit einer als Diffusionsbarriere wirkenden Schutzschicht überzogen sein, durch die nur eine begrenzte Gasmenge an die Elektrode gelangt.

Neben dem Sauerstoffanteil im Abgas hat die Temperatur des zwischen den Elektroden liegenden keramischen Festkörperelektrolyten einen erheblichen Einfluss auf die Sondenspannung. Die Nennbetriebstemperatur ist herstellerseitig angegeben. Die Nennbetriebstemperatur kann ein konkreter Temperaturwert, vorzugsweise aber ein Bereich von beispielsweise 300°C bis 600°C sein. Ein schnelles Erreichen der Nennbetriebstemperatur, unabhängig von der Abgastemperatur, wird mit einer elektrischen Heizung möglich.

Aus der nicht vorveröffentlichen DE 101 474 08 A1 ist ein Verfahren zum Betreiben eines Lambdasensor bekannt geworden, das neben einem Betreiben des Lambdasensors mit der Nennbetriebstemperatur ein zyklisches kurzzeitiges Betreiben des Lambdasensors mit einer erhöhten Betriebstemperatur zum Befreien der Sensoroberfläche von Fremdstoffen vorsieht.

Aus der DE 199 44 555 A1 ist ein Lambdasensor mit einer Energieversorgung für die Sensorheizung bekannt geworden, die in einer kurzen ersten Betriebsphase eine hohe, oberhalb eines Nennbetriebs liegende Leistung zum schnellen Erhitzen des Lambdasensors, und in einer darauffolgenden zweiten Betriebsphase die normale Leistung entsprechend dem Nennbetrieb zum ständigen Betreiben des Lambdasensors bereitstellt. Eine Leistungsregelung ist nicht erforderlich, da in einer Ausgestaltung eine Zeitsteuerung für die Umschaltung auf die normale Leistungsstufe vorgesehen sein kann.

Der Erfindung liegt die Aufgabe zu Grunde, ein Verfahren zum Betreiben eines Gassensors und eine Vorrichtung zur Durchführung des Verfahrens anzugeben, die einen erweiterten Betrieb des Gassensors ermöglichen.

Die Aufgaben werden durch die den unabhängigen Ansprüchen angegebenen Merkmale jeweils gelöst.

### Vorteile der Erfindung

Das erfindungsgemäße Verfahren sieht hiernach vor, dass der Gassensor, der zumindest eine Gaskomponente im Abgas von Verbrennungsprozessen detektiert, zumindest zeitweise mit einer Absenkbetriebstemperatur betrieben wird, die unter der Nennbetriebstemperatur liegt, bei welcher in katalytisch wirkenden Teilen des Gassensors ein thermodynamisches Gleichgewicht auftritt.

Das erfindungsgemäße Verfahren ermöglicht das gezielte Herabsetzen und Einstellen der katalytischen Aktivität in den katalytisch wirkenden Teilen wie beispielsweise einer Schutzschicht, die eine Elektrode umgibt, und/oder der Elektrode selbst.

Bei gleicher Zusammensetzung des Abgases ändert sich das vom Gassensor bereit gestellte Abgassignal, da das Erreichen des thermodynamischen Gleichgewichts gezielt eingeschränkt werden kann, so dass kinetische Vorgänge in der als Diffusionsbarriere wirkenden Schutzschicht und/oder in der Elektrode einen zunehmenden Einfluss erhalten.

Der Einfluss von beispielsweise Methan CH₄ im Abgas auf das Abgassignal, der durch die gegenüber Sauerstoff schnellere Diffusion in der Schutzschicht und/oder in der Elektrode verursacht ist, kann mit dem erfindungsgemäßen Verfahren reduziert werden.

Das erfindungsgemäße Verfahren reduziert die Herstellungskosten von Abgassensoren, da eine Erhöhung der Typenanzahl, die sich in der Betriebstemperatur unterscheiden, nicht erforderlich ist. Die Abgassensoren können daher einheitlich gefertigt werden, so dass große Stückzahlen möglich sind.

Vorteilhafte Ausgestaltungen und Weiterbildungen des erfindungsgemäßen Verfahren ergeben sich aus abhängigen Ansprüchen.

Eine Ausgestaltung sieht vor, dass der Gassensor auf dem Prinzip einer Nernstzelle beruht, bei der bei einem Abgas eines stöchiometrischen Verbrennungsprozesses eine sprungförmige Änderung im Abgassignal auftritt, da sich die Konzentration des Restsauerstoffs im Bereich der stöchiometrischen Verbrennung um mehrere Zehnerpotenzen ändert. Die Querempfindlichkeit, beispielsweise gegenüber Methan, kann gezielt herabgesetzt werden. Dem Abgassensor wird damit ein erweiterter Einsatzbereich erschlossen.

Eine vorteilhafte Ausgestaltung sieht vor, dass die Absenkbetriebstemperatur in einem gesteuerten Betrieb ohne Ermittlung eines Betriebstemperatur-Istwertsignals des Gassensors eingestellt wird. Mit dieser Maßnahme wird eine einfache Realisierung des Verfahrens möglich.

Gemäß einer anderen Ausgestaltung Verfahren ist vorgesehen, dass ein Betriebstemperatur-Istwertsignal des Gassensors erfasst wird und dass auf die Absenkbetriebstemperatur als vorgegebenes Betriebstemperatur-Sollwertsignal geregelt wird. Mit dieser Maßnahme wird die Einstellung der Betriebstemperatur auf die Absenkbetriebstemperatur sicher gestellt.

Eine Weiterbildung sieht vor, dass zumindest zwei unterschiedliche Betriebsarten des Verbrennungsprozesses vorgegeben werden und dass der Gassensor in einer ersten Betriebsart wenigstens zeitweise mit der Absenkbetriebstemperatur und in der weiteren Betriebsart mit der Nennbetriebstemperatur betrieben wird. Diese Weiterbildung ist geeignet zum Betreiben eines Gassensors, der in der Abgasanlage einer Brennkraftmaschine angeordnet ist, die einen Speicherkatalysator enthält, wobei der Speicherkatalysator in der ersten Betriebsart im zyklischen Wechsel zwischen einem Speicherbetrieb und einem Regenerierbetrieb betrieben wird.

Das Betreiben des Gassensors mit der Absenkbetriebstemperatur während des Regenerierbetriebs ermöglicht eine gezielte Reduzierung der Querempfindlichkeit. So wird beispielsweise der Einfluss von im Abgas enthaltenen Methan auf das Abgassignal verringert. Insbesondere kann der Abgassensor nach einem Speicherkatalysator eingesetzt werden, um das Ende des Regeneriervorgangs zu detektieren. Eine vorzeitige Änderung des Abgassignals, die beispielsweise durch Methan verursacht sein könnte, wird vermieden.

Eine erste erfindungsgemäße Vorrichtung zur Durchführung des Verfahrens enthält eine Heizungsenergieversorgung, welche die Absenktemperatur durch eine fest vorgegebene Absenkung der Heizleistung einstellt.

Eine alternative erfindungsgemäße Vorrichtung zur Durchführung des Verfahrens enthält eine Heizungsenergieversorgung, welche die Absenkbetriebstemperatur durch eine variable Heizleistung einstellt, die von der Ist-Betriebstemperatur des Gassensors beeinflusst ist.

Eine einfache Realisierung der Heizungsenergieversorgung ist mit einem Schaltbetrieb möglich, bei dem die Heizung des Gassensors im zyklischen Wechsel in einer Einschaltphase mit einer Spannungsquelle verbunden und in einer Abschaltphase von ihr getrennt ist. Die Heizleistung wird durch eine Beeinflussung der Zeitdauer zumindest einer der beiden Phasen eingestellt.

Vorteilhafte Ausgestaltungen und Weiterbildungen sowohl des erfindungsgemäßen Verfahrens zum Betreiben eines Gassensors als auch der erfindungsgemäßen Vorrichtung zur Durchführung des Verfahrens ergeben sich aus weiteren abhängigen Ansprüchen und aus der folgenden Beschreibung.

### Zeichnung

Es zeigen
- Fig. 1: eine Skizze eines möglichen technischen Umfelds, in welchem ein erfindungsgemäßes Verfahren ablaufen kann und
- Fig. 2: ein Blockschaltbild eines Ausführungsbeispiels einer erfindungsgemäßen Vorrichtung

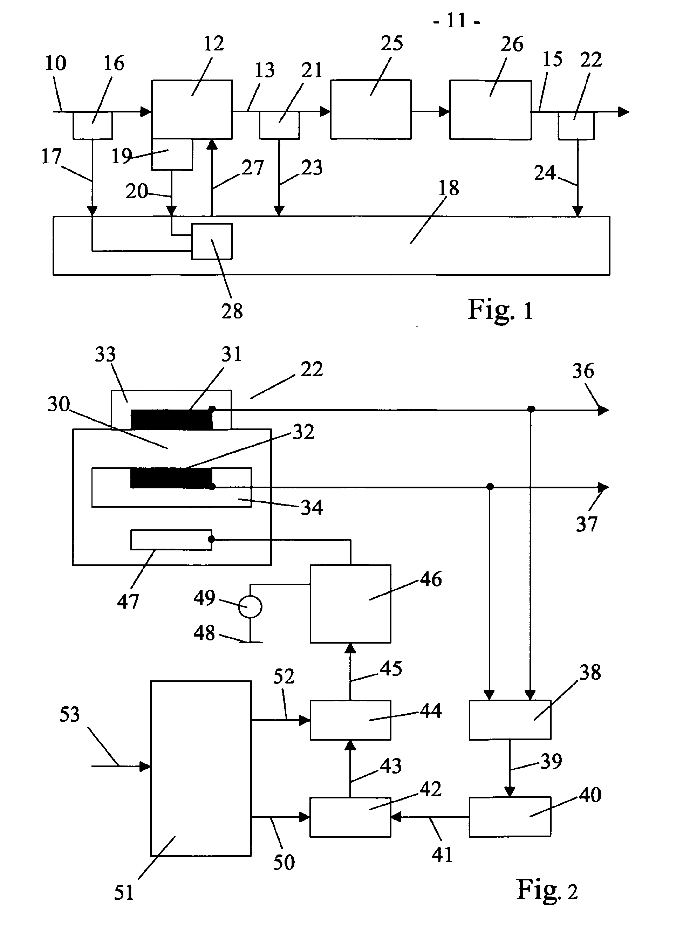

Figur 1 zeigt ein Ansaugsystem 10 und ein Abgassystem 11 einer Brennkraftmaschine 12. Das Abgassystem 11 enthält ein erstes, zweites und drittes Abgasteilsystem 13, 14, 15. Dem Ansaugsystem 10 ist ein Lastsensor 16 zugeordnet, der ein Lastsignal 17 an eine Steueranordnung 18 abgibt. Der Brennkraftmaschine 12 ist ein Drehzahlsensor 19 zugeordnet, der ein Drehzahlsignal 20 an die Steueranordnung 18 abgibt. Dem ersten Abgasteilsystem 13 ist ein erster Abgassensor 21 und dem dritten Abgasteilsystem 15 ein zweiter Abgassensor 22 zugeordnet. Der erste Abgassensor 21 gibt erstes Abgassignal 23 und der zweite Abgassensor 22 gibt ein zweites Abgassignal 24 an die Steueranordnung 18 ab. Zwischen dem ersten und zweiten Abgasteilsystem 13, 14 ist ein erster Katalysator 25 und zwischen dem zweiten und dritten Abgasteilsystem 14, 15 ein zweiter Katalysator 26 vorgesehen. Die Steueranordnung 18 enthält eine Betriebsartenauswahl 28, die in Abhängigkeit von zumindest dem Lastsignal 17 und/oder dem Drehzahlsignal 20 eine Betriebsart festlegt. Die Steueranordnung 18 gibt ein Kraftstoffzumesssignal 27 an die Brennkraftmaschine 12 ab.

Für das Folgende wird davon ausgegangen, dass die Brennkraftmaschine 12 in einem Kraftfahrzeug angeordnet ist.

Die Steueranordnung 18 legt in Abhängigkeit von Eingangssignalen wie beispielsweise dem Lastsignal 17, dem Drehzahlsignal 20, dem ersten und zweiten Abgassignal 23, 24 sowie in Abhängigkeit von weiteren, nicht näher gezeigten Eingangssignalen wie beispielsweise einem von einem Fahrer vorgegebenen Drehmomentwunsch, entsprechend einer Stellung eines Fahrpedals, das Kraftstoffzumesssignal 27 fest.

Zur Reinigung des Abgases der Brennkraftmaschine 12 sind der erste und zweite Katalysator 25, 26 vorgesehen. Der erste Katalysator25 ist beispielsweise ein Dreiwegekatalysator und der zweite Katalysator 26 beispielsweise ein Speicherkatalysator, vorzugsweise ein NOx-Speicherkatalysator. Die Betriebsartenauswahl 26 legt eine Betriebsart der Brennkraftmaschine 12 in Abhängigkeit von dem Lastsignal 17 und/oder dem Drehzahlsignal 20 und/oder dem nicht näher gezeigten Drehmomentwunsch des Fahrers sowie gegebenenfalls von weiteren Signalen fest.

Eine erste Betriebsart sieht beispielsweise eine Einbindung des als (NOx)-Speicherkatalysator ausgebildeten zweiten Katalysators 26 in die Abgasreinigung vor. In einer ersten Betriebsphase innerhalb der ersten Betriebsart wird die Brennkraftmaschine 12 mit einem mageren Gemisch, entsprechend einer Luftzahl Lambda > 1 betrieben. Die erste Betriebsphase zeichnet sich durch einen geringeren Kraftstoffverbrauch aus. Das vermehrt entstehende NOx wird im zweiten Katalysator 26 gespeichert. Da die Speicherkapazität begrenzt ist, muss der zweite Katalysator 26 in einer zweiten Betriebsphase innerhalb der ersten Betriebsart regeneriert werden. Das Regenerieren kann in Abhängigkeit von der Ausgestaltung des zweiten Katalysators 26 beispielsweise durch im Abgas enthaltene Kohlenwasserstoffe, Wasserstoff und Kohlenmonoxid erreicht werden. Eine Anreicherung dieser Stoffe wird in der zweiten Betriebsphase durch einen fetten Betrieb der Brennkraftmaschine 12, entsprechend einer Luftzahl Lambda < 1 erreicht.

Eine zweite Betriebsart sieht vor, dass der zweite Katalysator 26 nicht speziell in die Abgasreinigung eingebunden ist. Die Brennkraftmaschine 12 kann mit einem hohen Drehmoment bei einer wenigstens näherungsweise stöchiometrischen Verbrennung, entsprechend einer Luftzahl Lambda = 1 betrieben werden. Die Entstehung von NOx ist so weit reduziert, dass der vorhandene erste Katalysator 25, der als Dreiwegekatalysator ausgebildet sein kann, in der zweiten Betriebsart allein in der Lage ist, das Abgas ausreichend zu reinigen.

Das erste Abgassignal 23 ist im Wesentlichen vorgesehen, einen Istwert der Luftzahl bereit zu stellen, um die Gemischzusammensetzung der Brennkraftmaschine 12 regeln zu können. Das zweite Abgassignal 24 ist im Wesentlichen vorgesehen zum Erkennen des Endes des Regeneriervorgangs des zweiten Katalysators 26.

Die von den Abgassensoren 21, 22 bereit gestellten Abgassignale 23, 24 hängen von der Betriebstemperatur der Abgassensoren 21, 22 ab. Die heute eingesetzten Abgassensoren 21, 22 enthalten eine Heizung zur Einstellung der Temperatur auf eine Nennbetriebstemperatur, wobei die Nennbetriebstemperatur hier so verstanden wird, dass auch ein Temperaturbereich vorgegeben sein kann. Im Allgemeinen ist herstellerseitig nicht die Nennbetriebstemperatur, sondern eine Nennheizleistung bzw. ein Nennheizleistungsbereich spezifiziert, dessen Einhaltung zum Einhalten der Nennbetriebstemperatur führt. Mit der vorgegebenen Heizleistung der Heizung der Abgassensoren 21, 22 wird erreicht, dass ein Absinken unter eine Mindesttemperatur und ein Überschreitung einer Maximaltemperatur vermieden wird.

Die Heizleistung liegt beispielsweise in einem Bereich von 7 bis 20W. Der höhere Wert entspricht der Leistung eines kalten Abgassensors 21, 22 bei der Inbetriebnahme und bei kaltem Abgas. Der niedrigere Wert entspricht der Leistung im anschließenden Dauerbetrieb, wenn der Abgassensor 21, 22 seine Nennbetriebstemperatur erreicht hat. Die Nennbetriebstemperatur liegt beispielsweise in einem Bereich von 300°C und 650°C, während die Absenkbetriebstemperatur beispielsweise in einem Bereich von 200°C bis 350°C liegen kann. Entsprechend verringert sich die Heizleistung bei der Absenkbetriebstemperatur auf beispielsweise einen Bereich von 3 bis 10W.

Figur 2 zeigt ein Blockschaltbild eines Ausführungsbeispiels einer Vorrichtung zur Durchführung des erfindungsgemäßen Verfahrens.

Beispielhaft ist in Figur 2 der zweite Abgassensor 22 näher dargestellt. Im Folgenden wird aber allgemein auf einen Abgassensor 21, 22 Bezug genommen. Der Abgassensor 21, 22 enthält eine Festelektrolytschicht 30, die zwischen einer ersten und zweiten Elektrode 31, 32 angeordnet ist. Die erste Elektrode 31 ist mit einer Schutzschicht 33 umgeben, die einem Abgas im dritten Abgasteilsystem 15 ausgesetzt ist. Die zweite Elektrode 32 ist in einem Luftreferenzraum 34 angeordnet.

An den Elektroden 31, 32 sind eine erste bzw. eine zweite Sensorleitung 36, 37 angeschlossen, zwischen denen das erste bzw. zweite Abgassignal 23, 24 auftritt. Die Sensorleitungen 36, 37 sind mit einer Innenwiderstandsermittlung 38 verbunden, die ein Innenwiderstandssignal 39 an eine Betriebstemperatur-Istwertermittlung 40 weitergibt, welche ein Betriebstemperatur-Istwertsignal 41 an einen Temperaturregler 42 abgibt.

Der Temperaturregler 42 ermittelt eine Stellgröße 43 für einen Impulsbreitenmodulator 44, der ein impulsbreitenmoduliertes Signal 45 an eine Heizungsenergieversorgung 46 abgibt, welche mit einer Heizung 47 des Abgassensors 21, 22 verbindbar ist. Die Heizungsenergieversorgung 46 bezieht die Heizenergie aus einer mit einer Masse 48 verbundenen Spannungsquelle 49.

Der Temperaturregler 42 erhält ein Betriebstemperatur-Sollwertsignal 50 von einer Temperaturauswahl 51, die das Betriebstemperatur-Sollwertsignal 50 sowie ein an den Impulsbreitenmodulator 44 abgegebenes Schaltsignal 52 aus einem Eingangssignal 53 ermittelt.

Die Heizungsenergieversorgung 46 legt die Heizleistung der Heizung 47 fest. Geeignet ist ein Schaltbetrieb der Heizungsenergieversorgung 46, bei dem die Heizung 47 im zyklischen Wechsel in einer Einschaltphase mit der Spannungsquelle 49 verbunden und in einer Abschaltphase von ihr getrennt ist. Der Schaltbetrieb reduziert die von der Spannungsquelle 49, beispielsweise ein Bordnetz eines Kraftfahrzeugs, bereit gestellte Spannung. Die mittlere Spannung wird mit dem impulsbreitenmodulierten Signal 45 eingestellt, welches die Dauer der Einschaltphase und/oder die Dauer der Ausschaltphase ändern kann.

Gemäß einer ersten Ausgestaltung des erfindungsgemäßen Verfahrens ist ein Betreiben des Abgassensors 21, 22 ständig mit einer gegenüber der Nennbetriebstemperatur niedrigeren Absenkbetriebstemperatur vorgesehen.

Gemäß einer anderen Ausgestaltung des erfindungsgemäßen Verfahrens ist ein Betreiben des Abgassensors 21, 22 zeitweise mit der gegenüber der Nennbetriebstemperatur niedrigeren Absenkbetriebstemperatur vorgesehen.

Der mit dem Absenken der Betriebstemperatur des Abgassensors 21, 22 auf die Absenkbetriebstemperatur verbundene Vorteil liegt in einer festgestellten niedrigeren Querempfindlichkeit gegenüber Abgasbestandteilen, die an sich das Abgassignal 23, 24 nicht beeinflussen sollten.

Das erfindungsgemäße Verfahren ermöglicht das gezielte Herabsetzen und Einstellen der Aktivität von katalytisch wirkenden Teilen des Gassensors 21, 22 wie der Schutzschicht 33 und/oder der ersten Elektrode 31.

Bei gleicher Zusammensetzung des Abgases ändert sich das Abgassignal 23, 24, da das Erreichen des thermodynamischen Gleichgewichts gezielt eingeschränkt werden kann, so dass kinetische Vorgänge in der als Diffusionsbarriere wirkenden Schutzschicht 33 und/oder in der ersten Elektrode 31 einen zunehmenden Einfluss erhalten.

Der Einfluss von beispielsweise Methan CH₄ im Abgas auf das Abgassignal 23, 24, der durch die gegenüber Sauerstoff schnellere Diffusion in der Schutzschicht 33 und/ in der ersten Elektrode 31 verursacht ist, kann mit dem erfindungsgemäßen Verfahren reduziert werden.

Gemäß einer ersten Ausgestaltung der erfindungsgemäßen Vorrichtung ist ein gesteuerter Betrieb vorgesehen, bei dem ohne Rückmeldung des Betriebstemperatur-Istwertsignals 41 die Heizleistung festgelegt wird. In diesem Fall kann lediglich das Schaltsignal 52 vorgesehen sein, das dem Impulsbreitenmodulator 44 zugeführt ist. Die Temperaturauswahl 51 legt das Schaltsignal 52 in Abhängigkeit vom Eingangssignal 53 fest, das beispielsweise einer bestimmten Betriebsart und/oder einer bestimmten Betriebsphase innerhalb der Betriebsart der Brennkraftmaschine 12 entsprechen kann.

Besonders vorteilhaft ist ein Betreiben des Abgassensors 21, 22 mit der Absenkbetriebstemperatur in der zweiten Phase der ersten Betriebsart der Brennkraftmaschine 12, in welcher der zweite Katalysator 26 regeneriert wird, da insbesondere in der zweiten Phase beispielsweise durch Methan im Abgas ein zweites Abgassignal 24 auftreten kann, das ein Ende des Regeneriervorgangs signalisiert, der somit zu früh abgebrochen werden würde.

Sofern der Gassensor 21, 22 ständig mit der Absenkbetriebstemperatur betrieben werden soll, kann die Temperaturauswahl 51 entfallen, so dass das Eingangssignal 53 identisch wird mit dem Schaltsignal 52, das auf einen festen Wert festgelegt ist.

Eine andere Ausgestaltung der erfindungsgemäßen Vorrichtung sieht einen geregelten Betrieb zum Einstellen der Absenkbetriebstemperatur vor. Hierzu ist die Ermittlung des Istwerts der Betriebstemperatur des Abgassensors 21, 22 vorgesehen. Der Istwert der Betriebstemperatur kann näherungsweise beispielsweise durch Ermittlung des Innenwiderstands der Heizung erfolgen. Da es auf die Betriebstemperatur im Wesentlichen in dem Festelektrolyten 30 ankommt, wird vorzugsweise der Innenwiderstand zwischen den Elektroden 31, 32 ermittelt. Die Innenwiderstandsermittlung 38 ist daher mit den Sensorleitungen 36, 37 verbindbar. Die Innenwiderstandsermittlung 38 kann den Innenwiderstand beispielsweise durch Einprägen eines Stroms ermitteln, der durch den Festelektrolyten 30 fließt und der somit dem Abgassignal 23, 24 überlagert ist. Die Betriebstemperatur-Istwertermittlung 40 ermittelt aus dem Innenwiderstandssignal 39 das Betriebstemperatur-Istwertsignal 40, das dem Temperaturregler 41 zugeführt ist. Durch einen Vergleich des Betriebstemperatur-Istwertsignals 41 mit dem Betriebstemperatur-Sollwertsignal 50 stellt der Temperaturregler 42 die Stellgröße 43 bereit, die dem Impulsbreitenmodulator 44 zugeführt ist. Das Betriebstemperatur-Sollwertsignal 50, das die Temperaturauswahl 51 bereit stellt, entspricht der Absenkbetriebstemperatur oder gegebenenfalls der Nennbetriebstemperatur.

Sofern ein ständiges Betreiben des Abgassensors 21, 22 mit der Absenkbetriebstemperatur vorgesehen ist, kann die Temperaturauswahl 51 wieder entfallen, so dass das Eingangssignal 53 mit dem Betriebstemperatur-Sollwertsignal 50 identisch wird und auf einen festen Wert fest gelegt ist.

## Patentansprüche

1. Verfahren zum Betreiben eines Gassensors (21, 22), der zumindest eine Gaskomponente im Abgas von Verbrennungsprozessen detektiert, mit einer Heizungsenergieversorgung (46) zum Beheizen des Gassensors (21, 22), **dadurch gekennzeichnet, dass** der Gassensor (21, 22) zumindest zeitweise mit einer Absenkbetriebstemperatur betrieben wird, die unter der Nennbetriebstemperatur liegt, bei welcher in katalytisch wirkenden Teilen (31, 33) des Gassensors (21, 22) ein thermodynamisches Gleichgewicht auftritt.

2. Verfahren nach Anspruch 1, **dadurch gekennzeichnet, dass** als Gassensor (21, 22) ein Lambdasensor vorgesehen ist, der auf dem Prinzip einer Nernstzelle beruht, bei der bei einem Abgas eines stöchiometrischen Verbrennungsprozesses eine sprungförmige Änderung eines Abgassignals (23, 24) auftritt.

3. Verfahren nach Anspruch 1, **dadurch gekennzeichnet, dass** die Absenkbetriebstemperatur in einem gesteuerten Betrieb ohne Ermittlung eines Betriebstemperatur-Istwertsignals (41) des Abgassensors (21, 22) eingestellt wird.

4. Verfahren nach Anspruch 1, **dadurch gekennzeichnet, dass** die Absenkbetriebstemperatur in einem geregelten Betrieb eingestellt wird, bei dem eine Ermittlung eines Betriebstemperatur-Istwertsignals (41) des Abgassensors (21, 22) vorgesehen ist, das ein Temperaturregler (42) mit einem Betriebstemperatur-Sollwertsignal (50) vergleicht.

5. Verfahren nach einem der vorhergehenden Ansprüche, **dadurch gekennzeichnet, dass** zumindest zwei unterschiedliche Betriebsarten des Verbrennungsprozesses vorgesehen werden und dass der Gassensor (21, 22) in einer ersten Betriebsart wenigstens zeitweise mit der Absenkbetriebstemperatur und in weiteren Betriebsart mit der Nennbetriebstemperatur betrieben wird.

6. Verfahren nach Anspruch 5, **dadurch gekennzeichnet, dass** der Gassensor (21, 22) in einem Abgassystem (11) einer Brennkraftmaschine (12) angeordnet ist, die einen Speicherkatalysator (26) enthält, und dass der Speicherkatalysator (26) in der ersten Betriebsart im zyklischer Wechsel in einem Speicherbetrieb und einem Regenerierbetrieb betrieben wird.

7. Verfahren nach Anspruch 6, **dadurch gekennzeichnet, dass** der Gassensor (21, 22) während des Regenerierbetriebs mit der Absenkbetriebstemperatur betrieben wird.

8. Vorrichtung zur Durchführung des Verfahrens nach einem der vorhergehenden Ansprüche, **dadurch gekennzeichnet, dass** eine Heizungsenergieversorgung (46) vorgesehen ist, welche die Absenktemperatur durch eine fest vorgegebene Absenkung der Heizleistung einstellt.

9. Vorrichtung zur Durchführung des Verfahrens nach einem der Ansprüche 1 bis 7, **dadurch gekennzeichnet, dass** eine Heizungsenergieversorgung (46) vorgesehen ist, welche die Absenkbetriebstemperatur durch eine variable Heizleistung einstellt, die von einem Betriebstemperatur-Istwertsignal (41) des Gassensors (21, 22) beeinflusst ist.

10. Vorrichtung nach Anspruch 8 oder 9, dadurch gekenntzeichnet, dass ein Schaltbetrieb der Heizungsenergieversorgung (46) vorgesehen ist, bei dem die Heizung (47) des Gassensors (21, 22) im zyklischen Wechsel in einer Einschaltphase mit einer Spannungsquelle (49) verbunden und in einer Abschaltphase getrennt ist, und dass die Heizleistung durch eine Beeinflussung der Zeitdauer zumindest einer der beiden Phasen eingestellt wird.

## Claims

1. Method for operating a gas sensor (21, 22) which detects at least one gas component in the exhaust gas of combustion processes, having a heat energy supply (46) for heating the gas sensor (21, 22), **characterized in that** the gas sensor (21, 22) is operated at least intermittently at a reduced operating temperature which lies below the nominal operating temperature at which thermodynamic equilibrium is present in catalytically active parts (31, 33) of the gas sensor (21, 22).

2. Method according to Claim 1, **characterized in that**, as a gas sensor (21, 22), a lambda sensor is provided which operates on the principle of a Nernst cell in which a step-like change in an exhaust-gas signal (23, 24) occurs in the presence of an exhaust gas from a stoichiometric combustion process.

3. Method according to Claim 1, **characterized in that** the reduced operating temperature is set in an open-loop control mode without the determination of an operating temperature actual value signal (41) of the exhaust-gas sensor (21, 22).

4. Method according to Claim 1, **characterized in that** the reduced operating temperature is set in a closed-loop control mode in which a determination of an operating temperature actual value signal (41) of the exhaust-gas sensor (21, 22) is performed, said operating temperature actual value signal being compared with an operating temperature setpoint value signal (50) by a temperature regulator (42).

5. Method according to one of the preceding claims, **characterized in that** at least two different operating modes of the combustion process are provided, and **in that** the gas sensor (21, 22) is operated at least intermittently with the reduced operating temperature in a first operating mode and is operated with the nominal operating temperature in a further operating mode.

6. Method according to Claim 5, **characterized in that** the gas sensor (21, 22) is arranged in an exhaust system (11) of an internal combustion engine (12) which comprises a storage catalytic converter (26), and **in that** the storage catalytic converter (26), in the first operating mode, is operated in a storage mode and a regeneration mode in cyclic alternation.

7. Method according to Claim 6, **characterized in that** the gas sensor (21, 22) is operated at the reduced operating temperature during the regeneration mode.

8. Device for carrying out the method according to one of the preceding claims, **characterized in that** a heat energy supply (46) is provided which sets the reduced temperature by means of a fixedly predefined reduction of the heating power.

9. Device for carrying out the method according to one of Claims 1 to 7, **characterized in that** a heat energy supply (46) is provided which sets the reduced operating temperature by means of a variable heating power which is influenced by an operating temperature actual value signal (41) of the gas sensor (21, 22).

10. Device according to Claim 8 or 9, **characterized in that** a switching mode of the heat energy supply (46) is provided, in which the heater (47) of the gas sensor (21, 22) is, in cyclic alternation, connected to a voltage source (49) in an activation phase and separated from the voltage source in a deactivation phase, and **in that** the heating power is set by means of a manipulation of the time duration of at least one of the two phases.

## Revendications

1. Procédé pour actionner un détecteur de gaz (21, 22) qui détecte au moins un composant gazeux dans le gaz d'échappement de processus de combustion, comprenant une alimentation en énergie de chauffage (46) pour chauffer le détecteur de gaz (21, 22), **caractérisé en ce que** le détecteur de gaz (21, 22) est actionné au moins temporairement à une température fonctionnelle d'abaissement qui est en dessous de la température fonctionnelle nominale à laquelle se produit un équilibre thermodynamique dans les pièces agissant catalytiquement (31, 33) du détecteur de gaz (21, 22).

2. Procédé selon la revendication 1, **caractérisé en ce que** l'on prévoit comme détecteur de gaz (21, 22) un capteur lambda qui repose sur le principe d'une cellule de Nernst, dans laquelle, dans le cas d'un gaz d'échappement d'un processus de combustion stoechiométrique, il se produit une modification de type saut d'un signal de gaz d'échappement (23, 24).

3. Procédé selon la revendication 1, **caractérisé en ce que** la température fonctionnelle d'abaissement est ajustée dans un mode de fonctionnement commandé sans détecter de signal de valeur instantanée de la température fonctionnelle (41) du détecteur de gaz d'échappement (21, 22).

4. Procédé selon la revendication 1, **caractérisé en ce que** la température fonctionnelle d'abaissement est ajustée dans un mode de fonctionnement régulé, dans lequel est prévue une détection d'un signal de valeur instantanée de la température fonctionnelle (41) du détecteur de gaz d'échappement (21, 22), lequel signal de valeur instantanée est comparé avec un signal de valeur de consigne de la température fonctionnelle (50) par un régulateur de température (42).

5. Procédé selon l'une quelconque des revendications précédentes, **caractérisé en ce qu'**au moins deux modes de fonctionnement différents du processus de combustion sont prévus et **en ce que** le détecteur de gaz (21, 22) est actionné dans un premier mode de fonctionnement au moins temporairement à la température de fonctionnement d'abaissement et dans un mode de fonctionnement supplémentaire à la température fonctionnelle nominale.

6. Procédé selon la revendication 5, **caractérisé en ce que** le détecteur de gaz (21, 22) est disposé dans un système de gaz d'échappement (11) d'un moteur à combustion interne (12) qui contient un catalyseur à accumulation (26), et **en ce que** le catalyseur à accumulation (26) est actionné dans le premier mode de fonctionnement en alternance cyclique dans un mode d'accumulateur et dans un mode de régénérateur.

7. Procédé selon la revendication 6, **caractérisé en ce que** le détecteur de gaz (21, 22) est actionné pendant le mode de fonctionnement de régénérateur à la température fonctionnelle d'abaissement.

8. Dispositif pour mettre en oeuvre le procédé selon l'une quelconque des revendications précédentes, **caractérisé en ce qu'**une alimentation en énergie de chauffage (46) est prévue, laquelle ajuste la température d'abaissement par un abaissement prédéfini fixement de la puissance de chauffage.

9. Dispositif pour mettre en oeuvre le procédé selon l'une quelconque des revendications 1 à 7, **caractérisé en ce qu'**une alimentation en énergie de chauffage (46) est prévue, laquelle ajuste la température fonctionnelle d'abaissement par une puissance de chauffage variable qui est influencée par un signal de valeur instantanée de la température fonctionnelle (41) du détecteur de gaz (21, 22).

10. Dispositif selon la revendication 8 ou 9, **caractérisé en ce qu'**un mode de commutation de l'alimentation en énergie de chauffage (46) est prévu, dans lequel le chauffage (47) du détecteur de gaz (21, 22) est connecté en alternance cyclique dans une phase d'enclenchement avec une source de tension (49) et est déconnecté dans une phase de coupure, et **en ce que** la puissance de chauffage est ajustée par une influence de la durée d'au moins l'une des deux phases.
